# EUROPEAN PATENT APPLICATION

(11) **EP 1 788 020 A1**
(43) Date of publication of application: **23.05.2007**
(21) Application number: 05783574.6
(22) Date of filing: 07.09.2005
(51) Int. Cl.: C08L 9/00, B60C 1/00, C08K 3/36, C08K 5/40, C08K 5/548

(54) **RUBBER COMPOSITION FOR TIRES**

(30) Priority: 10.09.2004 JP 2004263970; 05.09.2005 JP 2005256868
(71) Applicant: THE YOKOHAMA RUBBER CO., LTD., Tokyo 105-8685 (JP)
(72) Inventor: KAMEDA, Yoshihiro THE YOKOHAMA RUBBER CO., LTD., Kanagawa 2548601 (JP); AMINO, Naoya THE YOKOHAMA RUBBER CO., LTD., Kanagawa 2548601 (JP)
(74) Representative: HOFFMANN EITLE
(86) International application number: PCT/JP2005/016865
(87) International publication number: WO 2006/028254

(57) **Abstract**

A rubber composition for a tire having greatly shortened vulcanization time, good silica dispersibility and, after vulcanization, superior braking capability, abrasion resistance and low rolling resistance, comprising (A) 100 parts by weight of a conjugated diene-based rubber, (B) 90 to 150 parts by weight of a reinforcing filler containing silica, (C) 0 to 40 parts by weight of an oil, (D) 4 to 20% by weight, based upon the weight of the silica, a silane coupling agent having the formula (I):

Y₃ Si-Cₙ H₂ₙA (I)

wherein Y indicates a C₁ to C₂₅ alkyl or alkoxyl group or a chloro group, the three Y's may be the same or different, n is an integer of 1 to 6, A is a mercapto group or SₘZ group, where Z is the group: 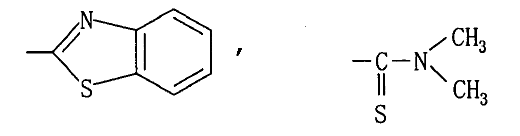 or 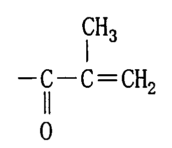 and m is an integer of 1 to 6)
(E) sulfur, and (F) 0.05 to 5 parts by weight of a thiuram disulfide-based vulcanization accelerator having the formula (II): 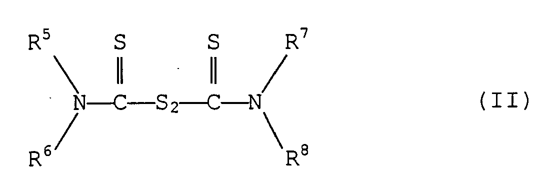 wherein R⁵, R⁶, R⁷ and R⁸ are independently hydrocarbon groups having 2 to 18 carbon atoms, is provided.

## Description

### TECHNICAL FIELD

The present invention relates to a silica-compounded rubber composition for a tire, more specifically relates to a rubber composition suitable for use as a tire, in particular as a tire tread, which greatly shortens the vulcanization time, is excellent in dispersibility of silica, and exhibits, after vulcanization, a superior braking capability, abrasion resistance, and low rolling resistance.

### BACKGROUND ART

If a large amount of silica is compounded to the silica-compounded rubber composition, there is a problem of retarded vulcanization due to the adsorption of the vulcanization accelerator. Further, there was the problem that the dispersibility of the silica in the rubber was poor and, therefore, the processability and physical properties of the rubber composition are decreased. To solve this problem, technology for using a thiuram disulfide-based vulcanization accelerator to improve the vulcanization rate of a silane coupling agent-compounded rubber composition has been proposed (for example, see Japanese Patent Publication (A) No. 2002-220492, Japanese Patent Publication (A) No. 2002-220491, and Japanese Patent Publication (A) No. 2001-172432). None of the technology for improving the vulcanization rate and simultaneously improving the dispersibility of the silica is yet satisfactory at the present time.

On the other hand, in tire tread rubber compositions, carbon black has been introduced for the purpose of improving the steering stability, strength, abrasion resistance, etc. after vulcanization, but the higher the content of the carbon black, there are tendencies that, the greater the hysteresis loss and the higher the heat buildup, and, as a result, the larger the rolling resistance.

Further, in recent years, reduction of fuel consumption of automobiles by improvement of tire performance has been sought. To reduce the fuel consumption by the reduction of tire rolling resistance, a rubber composition in which carbon black having a large hysteresis loss is replaced with silica having a smaller hysteresis loss and characteristics such as improved braking capability on wet road surfaces (hereinafter, simply referred to as the "wet braking capability") has been proposed (for example, see Japanese National Publication No. 2004-530783 and Japanese Patent Publication (A) No. 2001-089605). Regarding such a tire rubber composition, is which carbon black is replaced with silica, it is desired that, in addition to reduced fuel consumption of the automobile, steering stability important for safety performance, the wet braking capability, abrasion resistance, rolling resistance, strength, etc. are further improved.

Further, when compounding silica to a tire rubber composition, since the dispersibility of the silica in the rubber components, etc. is low, there are limits to the content of the silica compounded to the rubber composition. In the tire tread rubber composition after vulcanization, it has been difficult to maintain suitable hardness and further improve the steering stability, wet braking capability, abrasion resistance, rolling resistance, strength, and other characteristics, which are important for the safety performance.

### DISCLOSURE OF THE INVENTION

Accordingly, the object of the present invention is to provide a rubber composition for a tire comprising a silica-compounded rubber composition which simultaneously solves the above-mentioned problems of the retarded vulcanization and the silica dispersibility.

Another object of the present invention is to provide a tire tread rubber composition having, while maintaining suitable hardness after vulcanization the improved steering stability, wet braking ability, abrasion resistance, rolling resistance, strength, and other characteristics.

In accordance with the present invention, there is provided a rubber composition for a tire comprising (A) 100 parts by weight of a conjugated diene-based rubber, (B) 95 to 150 parts by weight of a reinforcing filler containing silica, (C) 0 to 40 parts by weight of an oil, (D) 4 to 20% by weight, based upon the weight of the silica, a silane coupling agent having the formula (I):

Y₃Si-CₙH₂ₙA (I)

wherein Y indicates a C₁ to C₂₅ alkyl or alkoxyl group or a chloro group, the three Y's may be the same or different, n is an integer of 1 to 6, A is a mercapto group or SₘZ group, where Z is the group: 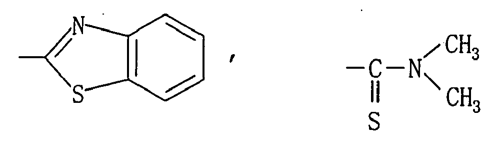 or 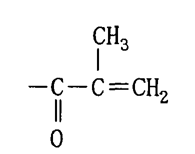 and m is an integer of 1 to 6,
(E) sulfur and 0.05 to 5 parts by weight of (F) a thiuram disulfide-based vulcanization accelerator having the formula (II) : 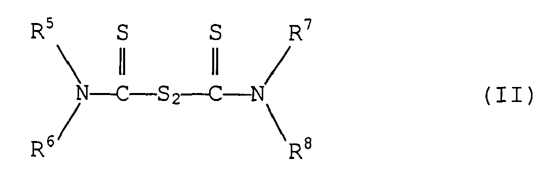 wherein R⁵, R⁶, R⁷, and R⁸ are independently hydrocarbon groups having 2 to 18 carbon atoms.

In accordance with the present invention, there is also provided the rubber composition for a tire, wherein a type A durometer hardness after vulcanization measured according to JIS K 6253 is within a range of 62 to 80 and the ratio φ_{R}/φ_{D} where the weight of the residue in the case of raising the temperature from room temperature to 700°C at a rate of temperature rise of 10°C/min in a nitrogen atmosphere is φ_{R} and the weight reduction is φ_{D} is within the range of 0.70 to 1.20.

### BEST MODE FOR CARRYING OUT THE INVENTION

In the present invention, the inventors found that it is possible to solve the problem of silica dispersibility in silica-compounded rubber compositions and the problem of retarded vulcanization all at once by combining such a rubber composition with an alkoxysilane coupling agent having a mercapto group, more preferably further combining with a thiuram disulfide-based vulcanization accelerator.

The tire rubber composition of the present invention has a type A durometer hardness according to JIS K 6253 after vulcanization of within the range of 62 to 80 and includes a reinforcing agent in an amount of a ratio φ_{R}/φ_{D} between the weight φ_{R} of the residue in the case of raising the temperature in a nitrogen atmosphere from room temperature to 700°C at a rate of temperature rise of 10°C/min and the weight reduction φ_{D} of within the range of 0.70 to 1.20. In this Description, in the above way, for the thermogravimetric analysis conducted under conditions of a rise in temperature in a nitrogen atmosphere from room temperature to 700°C by a rate of temperature rise of 10°C/min, the "weight reduction" means the reduction in weight due to the breakdown by heat of ingredients capable of being broken down by heat under these conditions, for example, the rubber component, or various types of compounding agents such as oil, capable of being broken down under heat. Further, in the disclosure of this Description, the "reinforcing agent component" means silica, carbon black, or another reinforcing filler capable of reinforcing the rubber composition and zinc oxide as a vulcanization acceleration aid. The reinforcing agent component may be composed of silica and zinc oxide or may be composed of silica and another reinforcing filler such as carbon black and zinc oxide. In this way, the inventors found that, according to the present invention, after vulcanization, while a suitable hardness is maintained, the steering stability, wet braking ability, abrasion resistance, rolling resistance, strength and other characteristics are improved.

The tire rubber composition of the present invention, as explained above, has a type A durometer hardness according to JIS K 6253, after vulcanization, within the range of 62 to 80, preferably 64 to 75. If the value of the type A durometer hardness is less than 62, the rubber obtained after vulcanization unpreferably becomes too soft and the steering stability deteriorates. On the other hand, if more than 80, the rubber obtained after vulcanization becomes too hard and the capability to follow uneven road surfaces deteriorates, and therefore this is not preferred.

The tire rubber composition of the present invention, as explained above, satisfies the above type A durometer hardness value after vulcanization and has a ratio φ_{R}/φ_{D} between the weight φ_{R} of the residue in the case of raising the temperature in a nitrogen atmosphere from room temperature to 700°C at a rate of temperature rise of 10°C/min by the thermogravimetric analysis method explained below and the weight reduction φ_{D} of within the range of 0.70 to 1.20, preferably 0.70 to 1.0. If the ratio φ_{R}/φ_{D} is less than 0.70, there is the defect that the wet braking capability will not be improved, while if it is more than 1.20, the ratio of the rubber component will become too small and there is the defect that the rubber composition will not be formed. The reinforcing agent component substantially remains, as a residue, under conditions of heating in a nitrogen atmosphere from room temperature to 700°C. The rubber component other than the reinforcing agent component and other ingredients with a relatively low heat decomposition temperature in the rubber composition of the present invention will be decomposed.

This is believed due to the fact that in a rubber composition containing at least silica as a reinforcing filler, the ratio of the fillers to the rubber components and oil and other various types of organic compounding agents becomes high.

The diene-based rubber (A) usable in the tire rubber composition of the present invention is not particularly limited to, but, for example, natural rubbers (NR), polyisoprene rubbers (IR), various types of polybutadiene rubbers (BR), various types of styrene-butadiene copolymer rubbers (SBR), acrylonitrile butadiene copolymer rubbers (NBR), chloroprene rubbers, ethylenepropylene-diene copolymer rubbers, styrene-isoprene copolymer rubbers, etc. may be mentioned.

Further, in the tire rubber composition of the present invention, as the diene-based rubber component, if an aromatic vinyl is contained in an amount of 15 to 50% by weight and an aromatic vinyl conjugated diene copolymer rubber (for example, SBR) having a content of 1,2-bonds in the conjugated diene polymer of 10 to 80% by weight and having a glass transition temperature of -45°C to -10°C, preferably -40°C to -15°C is contained in an amount of 20 parts by weight or more, preferably 20 to 100 parts by weight, a tire tread rubber composition having a low heat buildup and superior abrasion resistance is obtained.

The tire rubber composition of the present invention contains, as the reinforcing filler (B), a reinforcing filler containing silica in a total amount of 95 to 150 parts by weight, preferably 95 to 120 parts by weight. As the reinforcing filler other than silica, in general, carbon black is used, but, in addition, clay, calcium carbonate, alumina, etc. may be used. In the present invention, the silica usuable as the reinforcing filler is not particularly limited. For example, dry type white carbon (i.e., dry process silica), wet type white carbon (i.e., wet process silica), colloidal silica, precipitated silica, etc. may be mentioned. Specifically, silica produced by the wet method of reacting sodium silicate and sulfuric acid and salts in an aqueous solution or the dry method of producing fine powder anhydrous silicate particles at a high temperature of 1000°C or more may be used. The silica usable in the present invention may also be modified silica, which is modified with bis(3-triethoxysilylpropyl), bis(3-trimethoxysilylpropyl) or another polysulfide compound, 3-octanoylthio-propyl triethoxysilane, etc. Any of these silicas may be incorporated in an amount, based upon 100 parts by weight of the diene-based rubber, of within the range of 43 to 150 parts by weight. The specific surface area of the silica is not particularly limited. When the nitrogen adsorption specific surface area (BET method) is 30 to 400 m²/g, preferably 100 to 300 m²/g, more preferably 100 to 250 m²/g, most preferably 130 to 190 m²/g, the improvement in the reinforcing capability, abrasion resistance, heat buildup, etc. can be sufficiently achieved.

As the method for reacting the silica particles with the silane coupling agent in advance, a known method may be used. Specifically, the methods such as the dry reaction method, the wet reaction method, may be mentioned. As the dry reaction method, the method of charging silica particles into a Henschel mixer or other high speed mixing device and dropwise adding a stirred silane coupling agent or partially hydrolyzed silane coupling agent may be mentioned. In the dropwise addition method, it is preferable to make the silica particles uniformly react with the silane coupling agent. A known method may be used. For example, the method of spraying in a mist and the method of introducing a gaseous silane are known. A known reaction method of promoting a reaction between the silane coupling agent and the hydroxy groups on the surface of the silica particles may be used. For example, the method of aging under heating, the method of using an acid or alkali, or the method of using an organometallic catalyst containing tin, aluminum, etc. for a condensation reaction may be mentioned. The wet reaction method is the method of reacting silica particles in water or alcohol or a mixed solution thereof or other hydrolyzing solvent, in which a silane coupling agent has been dissolved, and, if necessary, followed by drying. A known reaction method for promoting the reaction between the silane coupling agent and the hydroxy groups on the surface of the silica particles can be used. As such a method, for example, the method of heat treatment, the method of use of an acid or alkali or the method of use of an organometallic catalyst including tin, aluminum, etc. for a condensation reaction may be mentioned.

Silica preferably forms 50 to 100% by weight of the total amount of the reinforcing filler. If less than 50% by weight, a tire using the rubber composition obtained for the tread part exhibits an insufficient wet braking ability, and therefore this is not preferred. So long as silica forms 50 to 100% by weight of the total amount of the reinforcing filler, carbon black or another reinforcing filler can be contained in any ratio, but carbon black is preferably contained in a ratio of 0 to 50% by weight of the total amount of reinforcing filler. If the amount of the carbon black is too large, the desired effect cannot be obtained.

Silica has a nitrogen adsorption specific surface area (N₂SA) of 30 to 300 m²/g, preferably 130 to 260 m²/g. When the N₂SA is less than 30 m²/g, it is possible to raise the amount of filling, the effect of improvement of the reinforcibility is poor and the wet braking capability cannot be improved. Silica having an N₂SA of over 300 m²/g is high in agglomeration capability, and therefore, dispersion in the rubber ingredient is difficult. Note that in the disclosure of this Description, the "nitrogen adsorption specific surface area (N₂SA)" means the specific area (unit m²/g) as measured according to ATSM D3037. Silica is preferably included in an amount, based upon 100 parts by weight of the rubber component, of 95 to 150 parts by weight.

As the silane coupling agent (D) usable in the rubber composition of the present invention, compounds having the following general formula:

Y₃Si-CₙH₂ₙA (I)

wherein Y is a C₁ to C₂₅ alkyl or alkoxyl group or a chloro group, where the three Y's may be the same or different, n is an integer of 1, 2, 3, 4, 5, or 6, and A is a mercapto group or an SₘZ group, where Z is: 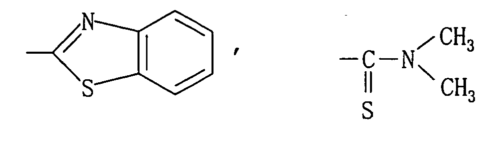 or 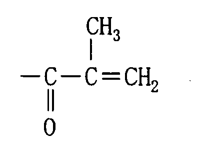 and m is an integer of 1, 2, 3, 4, 5, or 6, is preferable. As specific examples of compounds having the general formula (I), 3-mercaptopropyltrimethoxysilane, 3-mercapto-propyltriethoxysilane, 2-mercaptoethyltrimethoxysilane, 2-mercaptoethyltriethoxy-silane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-ethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropyl-benzothiazolyl tetrasulfide, 3-triethoxy-silylpropylmethacrylate monosulfide, and 3-trimethoxysilylpropylmethacrylate monosulfide agent may be mentioned. If blending the specific silane coupling agent of the general formula (III) in the rubber composition of the present invention, it is possible to achieve a greater improvement of the rolling resistance and the abrasion resistance.

As specific examples of other silane coupling agents usable in the rubber composition of the present invention, bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, and bis(3-trimethoxysilylpropyl)disulfide; vinyltriethoxysilane, vinyltrimethoxysilane and other vinyl-based silane coupling agents; 3-aminopropyltriethoxysilane, 3-aminopropyltrimethoxysilane, 3-(2-aminoethyl)aminopropyltriethoxysilane, 3-(2-aminoethyl)aminopropyltrimethoxysilane, and other amino-based silane coupling agents; γ-glycidoxypropyltriethoxysilane, γ-glycidoxypropyltrimethoxysilane, γ-glycidoxypropylmethyldiethoxysilane, γ-glycidoxypropylmethyldimethoxysilane, and other glycidoxy-based silane coupling agents; 3-nitropropyltrimethoxysilane, 3-nitropropyltriethoxysilane, and other nitro-based silane coupling agents; 3-chloropropyltrimethoxysilane, 3-chloropropyltriethoxysilane, 2-chloroethyltrimethoxysilane, 2-chloroethyltriethoxysilane, and other chloro-based silane coupling agents; etc. may be mentioned.

Among these silane coupling agents, from the viewpoints of both the effects of addition of the coupling agent and the cost, bis(3-triethoxysilylpropyl)tetrasulfide, 3-mercaptopropyltrimethoxysilane (for example, KBM-803 available from Shin-Etsu Chemical), etc. are preferably used. The silane coupling agent may be used alone or in mixtures of two or more types.

The silane coupling agent having the formula (I) is contained in an amount, based upon the weight of the silica, of 1 to 20% by weight, preferably 4 to 14% by weight. If the content of the silane coupling agent (D) is small, the dispersion of the silica in the rubber component becomes poor, while if the content to the silica is large, the scorch time becomes shorter and the processability is decreased.

Further, the tire rubber composition of the present invention preferably includes, as an ingredient (F), a thiuram disulfide-based vulcanization accelerator having the following general formula (II): 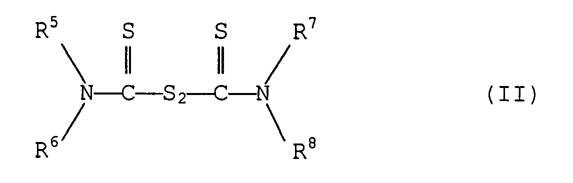 wherein R⁵, R⁶, R⁷ and R⁸ are independently hydrocarbon groups having 2 to 18 carbon atoms, for use together with the silane coupling agent having the formula (I). In particular, an accelerator having an R⁵ to R⁸ composed of benzyl groups (made by Flexsys, TBzTD) is preferable. The thiuram disulfide-based vulcanization accelerator having the formula (II) is included in an amount, based upon 100 parts by weight of the diene-based rubber, of 0.05 to 5 parts by weight, preferably 0.3 to 1.0 parts by weight at the time of use. If the content is small, the desired effect, in particular the vulcanization acceleration effect, is insufficient, while conversely if too large, the cross-linking density becomes too high and the rubber unpreferably becomes hard.

As the thiuram disulfide-based vulcanization accelerator (F), for example, tetramethylthiuram disulfide, tetraethylthiuram ethyl disulfide, tetrabutylthiuram disulfide, tetrapentamethylenethiuram disulfide, tetrabenzylthiuram disulfide, etc. may be mentioned.

Further, the tire rubber composition of the present invention preferably has a swell of the rubber composition, measured immersed in a toluene solution at 20°C for 48 hours, of 140 to 300%, preferably 150 to 260%, with respect to the volume before swelling. If adjusted in this way, a tire rubber composition high in strength and with a superior wet performance can be obtained. If this swell is less than 140%, the strength becomes low, while conversely if more than 300%, the cross-linking density of the tire member becomes too low and the wet performance unpreferably deteriorates. The swell of the rubber composition can be adjusted by, for example, changing the ratio of the vulcanization agent and vulcanization accelerator or the amount of the filler.

Further, the ratio of the thiuram disulfide-based vulcanization accelerator and the sulfur blended into the tire rubber composition of the present invention (i.e., thiuram disulfide-based vulcanization accelerator/sulfur) being, in weight ratio, within the range of 0.02 to 5.0, preferably 0.05 to 3.0, is preferable in that the effect of the thiuram disulfide-based vulcanization accelerator can be exhibited to the maximum and the wet performance can be increased. If this ratio is less than 0.02, the effect of this thiuram-based vulcanization accelerator cannot be exhibited, while conversely if more than 5.0, the cross-linking density becomes too high, which causes the wet performance to deteriorate.

As the carbon black usable in the tire tread rubber composition of the present invention, the SAF, ISAF and HAF grades usually used in tire treads may be mentioned. Carbon black is preferably used in an amount, based upon 100 parts by weight of the rubber component (A), of preferably 0 to 60 parts by weight.

Carbon black has an N₂SA of 60 to 160m²/g, preferably 70 to 150 m²/g. If the N₂SA of the carbon black is less than 60 m²/g, the reinforcing ability of the rubber is liable to become insufficient, while if more than 160 m²/g, the mixability with other ingredients at the time of blending is liable to deteriorate, and therefore this is not preferred.

As reinforcing inorganic fillers other than silica and carbon black, talc, calcium carbonate, aluminum hydroxide, magnesium carbonate, etc. may be mentioned.

The content of the reinforcing agent component constituted by the zinc oxide is, at the time of use, preferably 0.5 to 5 parts by weight, based upon 100 parts by weight of the rubber component.

The rubber composition of the present invention may contain, in addition to the silane coupling agent (D) having the formula (I), any other silane coupling agent known in the technical field of the present invention. By compounding, to the rubber composition of the present invention, the silane coupling agent (D), it is possible to further improve the processability at the unvulcanized state and the braking capability, rolling resistance and abrasion resistance after vulcanization.

The tire tread rubber composition of the present invention contains the oil (C) of the processing aid in an amount, based upon 100 parts by weight of the rubber ingredient, of preferably 0 to 40 parts by weight, more preferably 0 to 35 parts by weight. As the oil usable as the processing aid, one.among these known to be able to be used in the formulations of the tire tread rubber composition in that technical field may be included. As an oil usable as a processing aid, for example, aromatic oil, paraffin oil, or plant derived oil, for example, soybean oil, castor oil, rapeseed oil etc. may be mentioned.

The rubber composition of the present invention may contain, in addition to the zinc oxide and oil, the vulcanization or cross-linking agent, vulcanization or cross-linking accelerator, antioxidant, plasticizer, softening agent, and other various types of compounding agents and additives in the amounts generally used with respect to the rubber ingredient by the generally used blending methods.

The rubber composition of the present invention may be produced by general mixing or kneading methods and operating conditions using the usually used Banbury mixers or kneaders and other mixing or kneading devices. The rubber composition of the present invention may be produced by mixing or kneading together at least one type of rubber, a predetermined amount of a reinforcing filler, a predetermined amount of zinc oxide, and other general rubber compounding agents or preparing a rubber mixture of specific ingredients (master batch) in advance, then mixing or kneading this with given ingredients. These can be vulcanized under any conditions and used as tire rubber compositions. The contents of these may be made the conventional general contents so long as the objects of the present invention are not contravened.

### Examples

Examples and Comparative Examples will now be used to further explain the present invention, but the technical scope of the present invention is not limited to these Examples of course.

### Examples 1 to 3 and Comparative Examples 1 to 4

### Preparation of Test Samples

The components other than the sulfur and vulcanization accelerator component in each of the rubber formulations shown in the following Table I were mixed in a 1.8 liter internal mixer for 3 to 5 minutes. When reaching 150°C, the mixture was discharged as a master batch. The sulfur and the vulcanization accelerator were then added and mixed in by an 8 inch open roll to obtain a rubber composition, which was then used for the following tests.

### Test Methods

1) Vulcanization speed (i.e., optimum vulcanizing time T95): Measured according to JIS K 6300. A vibration type disk vulcanization tester is used for measurement of the t₉₅ time (min) at an amplitude of 1 degree and 160°C. Shown indexed to Comparative Example 1 as 100. The smaller this value, the faster the vulcanization of the rubber shown.
2) ΔG': an α Technology RPA2000 was used for measurement of the shear stress-strain-G'. The unvulcanized rubber prepared above was used for vulcanization at 160°C for 20 minutes. The G' at a strain of 0.28% to 30.0% was measured. The difference (G' 0.28 (MPa)-G' 30.0 (MPa)) was indicated as an index. The smaller this value, the better the dispersion of the silica shown.

The results are shown in Table I.

**Table I**

| | Comp. Ex. 1 | Comp. Ex. 2 | Comp. Ex. 3 | Comp. Ex. 4 | Ex. 1 | Ex. 2 | Ex. 3 |
|---|---|---|---|---|---|---|---|
| Formulation | | | | | | | |
| SBR¹⁾ | 96.25 | 96.25 | 96.25 | 96.25 | 96.25 | 96.25 | 96.25 |
| BR²⁾ | 30 | 30 | 30 | 30 | 30 | 30 | 30 |
| Silica³⁾ | 80 | 80 | 80 | 110 | 80 | 80 | 110 |
| Carbon black⁴⁾ | 20 | 20 | 20 | 20 | 20 | 20 | 20 |
| Silane coupling agent 1⁵⁾ | 6.4 | 6.4 | - | 8.8 | - | - | - |
| Silane coupling agent 2⁶⁾ | - | - | 6.4 | - | 6.4 | 6.4 | 8.8 |
| Zinc white⁷⁾ | 2.5 | 2.5 | 2.5 | 2.5 | 2.5 | 2.5 | 2.5 |
| Stearic acid⁸⁾ | 2 | 2 | 2 | 2 | 2 | 2 | 2 |
| Antioxidant⁹⁾ | 1 | 1 | 1 | 1 | 1 | 1 | 1 |
| Process oil¹⁰⁾ | 10 | 10 | 10 | 10 | 10 | 10 | 10 |
| Vulcanization accelerator CBS¹¹⁾ | 2.2 | 2.2 | 2.2 | 2.2 | 2.2 | 2.2 | 2.2 |
| Vulcanization accelerator DPG¹²⁾ | 0.5 | - | 0.5 | 0.5 | - | - | - |
| Vulcanization accelerator TBzTD¹³⁾ | - | 0.5 | - | - | 0.3 | 0.5 | 0.5 |
| Sulfur¹⁴⁾ | 2 | 1.6 | 2 | 1.6 | 1.6 | 1.6 | 1.6 |
| (TBzTD/sulfur) | - | 0.31 | - | - | 0.19 | 0.31 | 0.31 |

| Physical properties | | | | | | | |
|---|---|---|---|---|---|---|---|
| Vulcanization speed (t₉₅) (index) | 100 | 63 | 200 | 95 | 85 | 72 | 78 |
| ΔG' (G'0.28-G'30.0) (index) | 100 | 108 | 48 | 132 | 50 | 55 | 77 |

| | | | | | | | |
|---|---|---|---|---|---|---|---|
| Notes 1) VSL-5025 (made by Bayer), oil extended 37.5 phr 2) Nipol 1220 (made by Nippon Zeon) 3) Zeosil 1165 MP (made by Rhodia) 4) N234 (made by Showa Cabot) 5) Si69 (made by Degussa) 6) KBM-803 (made by Shin-Etsu Chemical) (3-mercaptopropyl trimethoxysilane) 7) Zinc Oxide #3 (made by Seido Chemical Industry) 8) Industrial use stearic acid (made by NOF Corporation) 9) Santoflex 6PPD (made by Flexsys) 10) Aromatic oil (made by Showa Shell Oil) 11) CBS (made by Flexsys) (N-cyclohexyl-2-benzothiazolyl sulfenamide) 12) DPG (made by Flexsys) (diphenylene guanidine) 13) TBzTD (made by Flexsys) (tetrabenzene thiuram disulfide) 14) Oil-containing powder sulfur (made by Tsurumi Chemical) | | | | | | | |

As is clear from the results of Table I, a tire rubber composition using both an alkoxysilane coupling agent having a specific mercapto group for a silica-reinforced rubber composition and a thiuram disulfide-based vulcanization accelerator, according to the present invention shows that the vulcanization speed is improved and the degree of dispersion of the silica is also remarkably improved.

### Examples 4 to 7 and Comparative Examples 5 to 7

### Preparation of Rubber Composition

According to the following Table II, a 1.8 liter internal Banbury mixer was used to mix the rubber, silica, carbon black, coupling agent, zinc white, and other materials other than the vulcanization system for 5 minutes. The mixture was then discharged from the mixer at 150°C, followed by cooling to room temperature. Thereafter, a 1.8 liter internal Banbury mixer was used to mix for 5 minutes, the mixture was discharged at 150°C, then an open roll was used to mix in the vulcanization accelerator and sulfur. In Example 4, according to the following Table II, a 1.8 liter internal Banbury mixer was used to mix the rubber, silica, carbon black, coupling agent, zinc white, and other materials other than the vulcanization system for 10 minutes. The mixture was discharged from the mixer at 150°C, then cooled to room temperature. Thereafter, a 1.8 liter internal Banbury mixer was used again to mix the mixture for 10 minutes. The mixture was discharged at 150°C, then an open roll was used to mix in the vulcanization accelerator and sulfur. The larger the number of mixing steps, the more preferable, but in these Examples and Comparative Examples, three-step mixture was used.

### Test Methods

The performances of the rubber compositions obtained by the following Examples and Comparative Examples were determined by the test methods shown below.
(1) Thermogravimetric analysis method: A heat scale (made by Shimazu, brandname TGA-50) was used to increase the temperature in a nitrogen atmosphere from room temperature to 700°C at a 10°C/min rate of temperature rise. Note that the samples used for the thermogravimetric analysis were taken from the vulcanized rubber compositions of the Examples and Comparative Examples in amounts of about 0.1 g and stabilized in temperature under conditions of a temperature of 25°C and a humidity of 50%. The weights of the temperature-stabilized samples were measured and recorded by a top pan electronic balance before use for thermogravimetric analysis. Nitrogen gas was circulated at a flow rate of 2 ml/min. Each sample was placed in a sample holder. The vulcanized rubber composition of each Example and Comparative Example was analyzed thermogravimetrically three times. The residue and weight reduction were found each time. The change in weight from room temperature to 700°C was measured every 70 seconds. The sample of each of the Examples and Comparative Examples was measured to find the difference between the weight of the sample before heat decomposition and the weight φ_{R} of the residue. This difference was designated as the weight reduction φ_{D}. The ratio φ_{R}/φ_{D} was calculated for each sample. The average value of the ratio φ_{R}/φ_{D} of each of the Examples and Comparative Examples was found and recorded in Table II.
(2) Type A durometer hardness: Value of hardness found based on JIS K 6253.
(3) Wet braking distance:
   Size 225/45R17 tires using the rubber compositions of the Examples and Comparative Examples for the tread parts were mounted on 2500 cc passenger cars which were then driven on asphalt road surfaces sprinkled with water and measured for braking stopping distance from an initial speed of 100 km. The results were expressed by percentages to the braking stopping distance of Comparative Example 5. The smaller the value, the shorter the braking distance and the better the braking ability.

The test results on the type A durometer hardness and wet braking distance are also shown in Table II.

**Table II. Formulations and Test Results of Rubber Compositions**

| | Comp. Ex. | | | Ex. | | | |
|---|---|---|---|---|---|---|---|
| | 5 | 6 | 7 | 4 | 5 | 6 | 7 |
| Formulation | | | | | | | |
| SBR (oil extended 37.5 phr)¹⁾ | 96.25 | 96.25 | 96.25 | 96.25 | 96.25 | - | 96.25 |
| SBR (oil extended 25 phr)²⁾ | - | - | - | - | - | 36 | - |
| SBR (non-oil extended)³⁾ | - | - | - | - | - | 50 | - |
| NR⁴⁾ | 30 | 30 | 30 | 30 | 30 | 20 | 30 |
| Silica⁵⁾ | 45 | 80 | 110 | 80 | 120 | 130 | 80 |
| Coupling agent A⁶⁾ | 3.6 | 6.4 | 10.4 | - | - | - | 6.4 |
| Coupling agent B⁷⁾ | - | - | - | 6.4 | 9.6 | 10.4 | - |
| Carbon black⁸⁾ | 55 | 20 | 20 | 20 | 10 | 20 | 20 |
| Stearic acid⁹⁾ | 2 | 2 | 2 | 2 | 2 | 2 | 2 |
| Zinc white¹⁰⁾ | 3 | 3 | 3 | 3 | 3 | 3 | 3 |
| Wax¹¹⁾ | 2 | 2 | 2 | 2 | 2 | 2 | 2 |
| Aromatic oil¹²⁾ | 20 | 3 | 16 | 3 | 10 | 2 | 5 |
| Sulfur¹³⁾ | 1.5 | 1.5 | 1.5 | 1.5 | 1.5 | 1.5 | 1.5 |
| Vulcanization accelerator A¹⁴⁾ | 1.7 | 1.7 | 1.7 | 1.7 | 1.7 | 1.7 | 1.7 |
| Vulcanization accelerator B¹⁵⁾ | 2 | 2 | 2 | 2 | 2 | 2 | 2 |
| Oil content (wt%) | 46 | 29 | 33 | 29 | 28 | 5 | 31 |
| φ_{R}/φ_{D} | 0.65 | 0.71 | 0.83 | 0.71 | 0.86 | 1.20 | 0.70 |

| Evaluation | | | | | | | |
|---|---|---|---|---|---|---|---|
| Durometer hardness | 70 | 81 | 87 | 68 | 73 | 80 | 78 |
| Wet braking distance | 100 | 110 | 112 | 95 | 92 | 99 | 97 |

| | | | | | | | |
|---|---|---|---|---|---|---|---|
| Notes 1) made by Nippon Zeon, Nipol 1721 (brandname) 2) made by Asahi Kasei, styrene-butadiene copolymer rubber, Tufden 1524 (brandname) 3) made by Nippon Zeon, styrene-butadiene copolymer rubber, NS120 (brandname) 4) STR20 5) made by Rhodia, Zeosil 1165MP (brandname) 6) made by Degussa, SI69 (brandname) 7) made by Shin-Etsu Chemical, mercaptosilane, KBM-803 (brandname) 8) made by Showa Cabot, Shoblack N234 (brandname) 9) made by NOF Corporation, Beads Stearic Acid 10) made by Seido Chemical Industry, Zinc Oxide #3 11) made by Ouchi Shinko Chemical, Sannox 12) made by Idemitsu Kosan, Aromatics 3 (brandname) 13) made by Tsurumi Chemical, oil extended sulfur 14) made by Ouchi Shinko Chemical, Noccelar CZ-G (brandname) 15) made by Ouchi Shinko Chemical, Noccelar D (brandname) | | | | | | | |

From Table II, it is learned that if the value of φ_{D}/φ_{R} is within the range of 0.70 to 1.20 and the type A durometer hardness is within the range of 62 to 80, the wet braking capability is improved.

### INDUSTRIAL APPLICABILITY

As explained above, the rubber composition of the present invention is useful, as a tire rubber composition, in particular a tire tread rubber composition.

## Claims

1. A rubber composition for a tire comprising (A) 100 parts by weight of a conjugated diene-based rubber by weight, (B) 95 to 150 parts by weight of a reinforcing filler containing silica (C) 0 to 40 parts by weight of an oil, (D) 4 to 20% by weight based upon the weight of the silica, of, a silane coupling agent having the formula (I):
Y₃Si-CₙH₂ₙA (I)
wherein Y indicates a C₁ to C₂₅ alkyl or alkoxyl group or a chloro group, the three Y's may be the same or different, n is an integer of 1 to 6, A is a mercapto group or SₘZ group, where Z is the group: 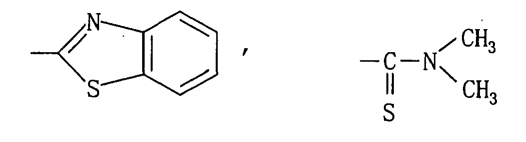 or 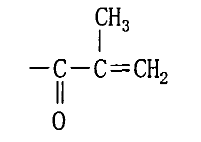 and m is an integer of 1 to 6
(E) sulfur and (F) 0.05 to 5 parts by weight of a thiuram disulfide-based vulcanization accelerator having the formula (II): 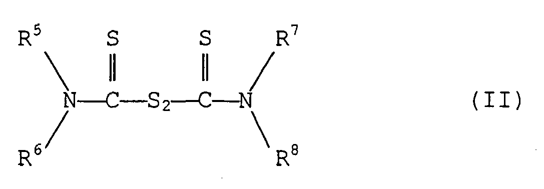 wherein R⁵, R⁶, R⁷ and R⁸ are independently hydrocarbon groups having 2 to 18 carbon atoms.

2. A tire rubber composition for a tire as claimed in claim 1, wherein said conjugated diene-based rubber (A) includes 20 parts by weight or more, based upon 100 parts by weight of the diene-based rubber, of an aromatic vinyl conjugated diene copolymer rubber, an aromatic vinyl content of the aromatic vinyl conjugated diene copolymer rubber is 15 to 50% by weight, a 1,2-bond content of the conjugated diene polymer part is 10 to 80% and a glass transition temperature (Tg) of the aromatic vinyl conjugated diene copolymer is -45°C to -10°C.

3. A rubber composition for a tire as claimed in claim 1 or 2, wherein a degree of swelling of the rubber composition measured by dipping in a toluene solution at 20°C for 48 hours is 140 to 300%, based upon the volume before the swelling.

4. A rubber composition for a tire as claimed in any one of claims 1 to 3, wherein a weight ratio (F)/(E) of the content of the thiuram disulfide-based vulcanization accelerator (F) and the sulfur (E) in the rubber composition is within the range of 0.02 to 5.0.

5. A rubber composition for a tire as claimed in any one of claims 1 to 4, wherein a type A durometer hardness after vulcanization measured according to JIS K 6253 is within the range of 62 to 80 and the ratio φ_{R}/φ_{D} where the weight of the residue in the case of raising the temperature from room temperature to 700°C at a rate of temperature rise of 10°C/min in an nitrogen atmosphere is φ_{R} and the weight reduction is φ_{D} is within the range of 0.70 to 1.20.

6. A tread rubber composition for a tire as claimed in any one of claims 1 to 5, wherein the reinforcing filler in the residue obtained when raising the temperature in the nitrogen atmosphere from room temperature to 700°C at a rate of temperature rise of 10°C/min includes 50 to 100% by weight of silica.

7. A rubber composition for a tire as claimed in any one of claims 1 to 6, wherein said silica has a nitrogen adsorption specific surface area of 130 to 260m²/g.
